# EUROPEAN PATENT APPLICATION

(11) **EP 4 600 733 A1**
(43) Date of publication of application: **13.08.2025**
(21) Application number: 23931833.0
(22) Date of filing: 11.12.2023
(51) Int. Cl.: G03B 9/06, H04N 23/55, H04N 23/68

(54) **CAMERA MODULE AND ELECTRONIC DEVICE**

(30) Priority: 07.04.2023 CN 202310406374
(71) Applicant: Honor Device Co., Ltd., Shenzhen, Guangdong 518040 (CN)
(72) Inventor: XIA, Taihong, Shenzhen, Guangdong 518040 (CN)
(74) Representative: Thun, Clemens
(86) International application number: PCT/CN2023/137839
(87) International publication number: WO 2024/207788

(57) **Abstract**

Embodiments of this application provide a camera module and an electronic device. The camera module includes a camera shot, a variable aperture component, and an image sensor, where the variable aperture component includes a base and a plurality of blades, the blades are rotationally connected to the base and enclose to form an aperture hole having an adjustable size, the camera shot is fixedly connected to the base, and the aperture hole is located in a direction of an optical axis of the camera shot; where both the base and the camera shot are fastened relative to an optical cover plate that covers on an object side of the camera shot in the electronic device; and the image sensor is located on an image side of the camera shot, and is movably disposed relative to the camera shot. The camera module of this application satisfies people's requirement on photographing quality of the camera module, and satisfies people's requirement on aesthetic appearance of the electronic device.

## Description

This application claims priority to Chinese Patent Application No. 202310406374.2, entitled "CAMERA MODULE AND ELECTRONIC DEVICE" filed with the China National Intellectual Property Administration on April 7, 2023, which is incorporated herein by reference in its entirety.

### TECHNICAL FIELD

This application relates to the field of electronic technologies, and in particular, to a camera module and an electronic device.

### BACKGROUND

In recent years, people have increasingly high requirement on excellent experience of electronic devices such as mobile phones, including aesthetic appearance of electronic devices and photographing quality of camera modules in electronic devices.

Using a mobile phone as an example, a position of a housing of the electronic device corresponding to a camera module is provided with an optical cover plate, and the optical cover plate covers on the camera module. Ambient light from the outside may enter a camera shot of the camera module through the optical cover plate, so as to implement a photographing function by using the camera module. To satisfy people's requirement on photographing quality, a variable aperture component is usually disposed in the camera module. An aperture hole of the variable aperture component is adjustable, so as to adjust a size of the aperture hole according to light intensity of ambient light in a photographing environment, to achieve different photographing effects.

However, when the existing camera module implements a photographing function, aesthetic appearance of the electronic device is degraded by the optical cover plate, and it is difficult to satisfy people's requirement on aesthetic appearance of the electronic device.

### SUMMARY

This application provides a camera module and an electronic device, to satisfy people's requirement on photographing quality of the camera module, and satisfy people's requirement on aesthetic appearance of the electronic device.

According to a first aspect of embodiments of this application, a camera module is provided, applied to an electronic device. The camera module includes a camera shot, a variable aperture component, and an image sensor, where the variable aperture component includes a base and a plurality of blades, the blades are rotationally connected to the base and enclose to form an aperture hole having an adjustable size, the camera shot is fixedly connected to the base, and the aperture hole is located in a direction of an optical axis of the camera shot; where both the base and the camera shot are fastened relative to an optical cover plate that covers on an object side of the camera shot in the electronic device; and the image sensor is located on an image side of the camera shot, and is movably disposed relative to the camera shot.

In the embodiments of this application, the variable aperture component is disposed in the camera module. Because the size of the aperture hole formed by enclosing of the blades in the variable aperture component is adjustable, a light inlet amount of the camera shot in the camera module can be adjusted by adjusting the aperture hole, which helps to satisfy people's requirement on photographing quality of the camera module in the electronic device. Both the base of the variable aperture component and the camera shot of the camera module are fastened relative to the optical cover plate that covers on the object side of the camera shot in the electronic device, so that distances between the variable aperture component and the optical cover plate and between the camera shot and the optical cover plate are always constant. In this way, appearance of the optical cover plate of the electronic device is always consistent and has desirable aesthetic effect, to satisfy people's requirement on aesthetic appearance of the electronic device and photographing quality of the camera module. In addition, the image sensor is movably disposed relative to the camera shot in the camera module, so as to implement an anti-shake and/or autofocus function of the camera module and the electronic device, so as to satisfy people's requirement on aesthetic appearance of the electronic device and photographing quality of the camera module.

In some optional implementations, the image sensor is movably disposed relative to the camera shot along the direction of the optical axis of the camera shot, so that the image sensor performs focus, to implement an autofocus function of the camera module;
and/or the image sensor is movably disposed relative to the camera shot in a plane perpendicular to the direction of the optical axis of the camera shot, so that the image sensor provides shake compensation, to implement an anti-shake function of the camera module.

In some optional implementations, the camera module includes a drive apparatus, the drive apparatus includes a drive component and a carrying component carrying the image sensor, and the carrying component is connected to the drive component, and is configured to be driven by the drive component to move relative to the camera shot along a direction of an optical axis of the camera shot and/or in a plane perpendicular to the direction of the optical axis of the camera shot, and drive the image sensor to synchronously move relative to the camera shot. In this way, the carrying component is driven by the drive component, and the image sensor is driven by the carrying component to move relative to the camera shot, to implement an autofocus and/or anti-shake function of the camera module.

In some optional implementations, the drive apparatus further includes a drive housing, the drive housing has a cavity, the carrying component and the drive component are both disposed in the cavity, a side of the drive housing facing the camera shot has a light inlet hole, and the light inlet hole communicates with the cavity. In this way, ambient light emitted from the camera shot can be received by the image sensor through the light inlet hole, thereby facilitating implementation of the photographing function of the camera module.

In some optional implementations, the base is located on a side of the drive housing facing the optical cover plate, so as to implement assembly and fastening of the variable aperture component and the camera shot on the camera module.

In some optional implementations, the base has an accommodating space communicating with the aperture hole, at least a part of the camera shot is located in the accommodating space, so that while the camera shot is conveniently assembled in the base, ambient light outside the electronic device is conveniently emitted into or out of the camera shot because the accommodating space communicates with the aperture hole.

In some optional implementations, the blade is located on the object side of the camera shot, and the center of the aperture hole is located on the optical axis of the camera shot, so that when adjusting the size of the aperture hole, the variable aperture component can better adjust the light inlet amount of the lens.

In some optional implementations, the variable aperture component further includes a rotor, and the rotor is rotationally disposed in base and is connected to the blades, so that when rotating relative to the base, the rotor drives the blade to rotate relative to the base around a rotation axis of the blade, to adjust a size of the aperture hole. Therefore, the size of the aperture hole can be adjusted through rotation of the rotor.

In some optional implementations, a mounting slot is provided in the base, and the rotor is fastened in the mounting slot and rotates relative to the base, so that when the rotor is rotationally disposed in the base, because the rotor is fastened in the mounting slot, the rotor can be prevented from falling out of the mounting slot.

In some optional implementations, the mounting slot is located on a circumferential side of the accommodating space of the base, so that when the rotor is rotationally disposed in the base, accommodating of the camera shot in the base is not affected.

In some optional implementations, the rotor has a sliding protrusion that is in sliding contact with a slot wall of the mounting slot, and the sliding protrusion is located on at least one of a circumferential side wall and a radial side wall of the rotor.

In this way, by disposing the sliding protrusion, a friction area with the base can be reduced during rotation of the rotor, to relatively prolong service life of the rotor and the variable aperture component.

In some optional implementations, the variable aperture component further includes at least one voice coil drive module, the voice coil drive module includes a coil and a magnetic body, and the magnetic body is fixedly connected to a circumferential side wall of the rotor; and
the coil is located in a position of the base opposite to the magnetic body, and the coil and the magnetic body sense each other during power on, to drive the rotor to rotate relative to the base.

In this way, by means of interaction between the coil and the magnetic body, the rotor can be rotationally disposed in the base, so that the rotor drives the blade to rotate relative to the base, thereby adjusting the size of the aperture hole.

In some optional implementations, the circumferential side wall of the rotor has an assembly slot, the magnetic body is embedded in the assembly slot, a position of the circumferential side wall of the base corresponding to the magnetic body has a gap, and the coil is located in the gap and has a clearance from the magnetic body.

In this way, by disposing the assembly slot, while assembly of the magnetic body on the rotor is implemented, the coil is located in the gap and has a clearance from the magnetic body, so that the coil and the magnetic body conveniently sense each other, so as to drive the rotor to rotate relative to the base.

In some optional implementations, the voice coil drive module further includes a flexible circuit board disposed on the base, and the coil is located on a side of the flexible circuit board facing the magnetic body, so as to provide a carrying component for fastening the coil on the base by using the flexible circuit board.

In some optional implementations, the variable aperture component further includes a magnetic guide piece pressed on the flexible circuit board, the magnetic guide piece is on the circumferential side wall of the base and is located on a side of the magnetic body facing the blade, and the magnetic guide piece is configured to attract the magnetic body, so that the rotor is suspended in the base.

The magnetic guide piece is on the circumferential side wall of the base and covers on the side of the magnetic body facing the blade, so that the magnetic guide piece is disposed in a staggered manner with the magnetic body along a thickness direction of the base. In this way, the magnetic guide piece can generate an attracting force for the magnetic body after attracting the magnetic body. The rotor can be suspended in the base by using the attracting force, so that the rotor is fastened in the base. Therefore, a quantity of structural members in the variable aperture component can be reduced while preventing the rotor from falling out of the mounting slot, thereby avoiding disposing a track slot between the base and the rotor, so that the variable aperture component has a simple structure. In addition, by means of pressing of the magnetic guide piece, stability of fastening of the flexible circuit board on the base can further be improved.

In some optional implementations, an attracting force of the magnetic guide piece for the magnetic body in the direction of the optical axis of the camera shot is greater than a total weight of the rotor and the magnetic body, so as to prevent the rotor from falling out of the mounting slot under the weight of the rotor and the magnetic body.

In some optional implementations, the magnetic body is located within a coverage range of the magnetic guide piece, and a geometrical center of the magnetic guide piece is located on a side of a geometrical center of the magnetic body facing the blade, so as to ensure that the magnetic guide piece is disposed in a staggered manner with the magnetic body along a thickness direction of the base while a sufficient attracting force exists between the magnetic guide piece and the magnetic body.

In some optional implementations, the variable aperture component further includes a drive chip, and the drive chip is located on a side of the flexible circuit board facing the rotor, and is electrically connected to the voice coil drive module, to control the voice coil drive module. In this way, the drive chip controls the voice coil drive module to drive the rotor to rotate relative to the base, to adjust the size of the aperture hole.

In some optional implementations, the drive chip includes a detection element, and the detection element is located on a side of the drive chip facing the rotor and is configured to detect a rotation position of the rotor. In this way, the drive chip may control, based on a detection value of the detection element, the voice coil drive module to drive the rotor to rotate relative to the base.

In some optional implementations, there are at least two voice coil drive modules, and the at least two voice coil drive modules are evenly distributed along a circumferential direction of the rotor. In this way, by disposing the at least two voice coil drive modules, not only rotation of the rotor relative to the base can be facilitated, but also stability of rotation of the rotor relative to the base can be enhanced under driving of the voice coil drive modules.

In some optional implementations, the rotor slides relative to the blade when rotating relative to the base, and drives the blade to rotate relative to the base around the rotation axis of the blade, to adjust the size of the aperture hole to adjust a light inlet amount of the camera shot in the camera module.

In some optional implementations, a position of the rotor corresponding to each of the blades is provided with a sliding part, a position of the base corresponding to each sliding part is provided with an avoidance hole, and a position of the blade corresponding to the sliding part is provided with a sliding hole; and
the sliding part passes through the avoidance hole and the sliding hole in sequence, and slides relative to the blade in the sliding hole when rotating relative to the base along with the rotor, so as to drive the blade to rotate relative to the base around the rotation axis of the blade.

In this way, when the rotor rotates relative to the base, the sliding part drives the blade to rotate relative to the base around the rotation axis of the blade, so as to adjust the size of the aperture hole.

In some optional implementations, a position of the base corresponding to each of the blades is provided with a connecting column, a first end of the blade is threaded on a corresponding connecting column and rotates relative to the base around the connecting column, and a central axis of the connecting column forms a rotation axis of the blade; and
a second end of each of the blades encloses to form the aperture hole, and synchronously rotates along with the first end of the blade when the first end of the blade rotates around the connecting column, to adjust the size of the aperture hole.

In this way, the size of the aperture hole can be adjusted through rotation of the blade around the connecting column.

In some optional implementations, the variable aperture component further includes a limiting cover plate, and the limiting cover plate is disposed on the blade and is fixedly connected to the base, to prevent the blade from falling out of the base when the blade rotates relative to the base.

According to a second aspect of the embodiments of this application, an electronic device is provided. The electronic device includes an optical cover plate and the camera module according to any one of the foregoing implementations. The optical cover plate covers on the object side of the camera shot in the camera module, so that ambient light outside the electronic device can be emitted into the camera shot through the optical cover plate. Therefore, a photographing function of the electronic device is implemented, and the optical cover plate of the electronic device has desirable aesthetic effect, to satisfy people's requirement on aesthetic appearance and photographing quality of the electronic device.

### BRIEF DESCRIPTION OF DRAWINGS

FIG. 1 is a schematic structural diagram of an electronic device according to an embodiment of this application;
FIG. 2 is a schematic diagram of partial disassembly of an electronic device according to an embodiment of this application;
FIG. 3 is a schematic diagram of partial assembly of an optical cover plate on a rear cover in the electronic device in FIG. 2;
FIG. 4 is a schematic structural diagram of a camera module of an electronic device provided by related art;
FIG. 5 is a schematic structural diagram of a camera module of an electronic device according to an embodiment of this application;
FIG. 6 is a schematic diagram of the inside of a camera module according to an embodiment of this application;
FIG. 7 is a principle diagram of movement of an image sensor in FIG. 6;
FIG. 8 is a schematic diagram of an external structure of a camera module according to an embodiment of this application;
FIG. 9 is an exploded view of the camera module in FIG. 8;
FIG. 10 is a structural view of an aperture hole of a variable aperture component under a first hole diameter in FIG. 8;
FIG. 11 is a structural view of an aperture hole of a variable aperture component under a second hole diameter in FIG. 8;
FIG. 12 is a schematic diagram of an assembly process of a rotor on a base according to an embodiment of this application;
FIG. 13 is a diagram of partial assembly of a camera shot in a variable aperture component according to an embodiment of this application;
FIG. 14 is an exploded view of a variable aperture component according to an embodiment of this application;
FIG. 15 is a schematic structural diagram of a variable aperture component provided by related art;
FIG. 16 is a schematic diagram of assembly of a rotor in a base according to an embodiment of this application;
FIG. 17 is an enlarged view of a part A of the variable aperture component in FIG. 13;
FIG. 18 is a schematic structural diagram of a rotor according to an embodiment of the present application; and
FIG. 19 is a sectional view of a part of a camera module according to an embodiment of this application.

Description of reference numerals in the accompanying drawings:
100-Electronic device; 1-Housing; 11-Middle frame; 111-Side frame; 112-Middle plate; 12-Rear cover; 2-Display screen; 3-Circuit board; 4-Camera module; 41-Camera shot; 42-Image sensor;
43-Variable aperture component; 431-Base; 4311-Accommodating space; 4312-Connecting column; 4313-Groove body; 4314-Separator; 4315-Mounting slot; 4316-Avoidance hole; 4317-Gap; 4318-Positioning protrusion; 432-Rotor; 4321-Sliding part; 4322-Assembly slot; 4323-Sliding protrusion;
433-Blade; 4331-First end; 4332-Second end; 4333-Arc-shaped gap; 4334-Perforation hole; 4335-Sliding hole; 434-Aperture hole; 435-Limiting cover plate; 4351-Open hole; 436-Voice coil drive module; 4361-Coil; 4362-Magnetic body; 4363-Magnet; 4364-Flexible circuit board; 437-Magnetic guide piece; 438-Drive chip;
44-Drive apparatus; 441-Drive component; 4411-Drive coil; 4412-Drive magnetic body; 442-Carrying component; 443-Drive housing; 45-Drive circuit board; 46-Ball;
5-Optical cover plate; 51-Camera hole region; and 52-Non-camera hole region.

### DESCRIPTION OF EMBODIMENTS

Terms used in implementations in this application are merely intended to explain specific embodiments of this application rather than being intended to limit this application.

For ease of understanding, related terminologies in the embodiments of this application are first described.

An optical axis is a straight line passing through the centers of lenses in a camera shot, and the lenses are stacked to form the camera shot.

With each lens group in a camera shot as a boundary, an object side is a side on which a photographed object is located.

With each lens group in a camera shot as a boundary, an image side is a side on which an image of a photographed object is located.

An embodiment of this application provides an electronic device. The electronic device may include, but is not limited to, an electronic device having a photographing function, such as a mobile phone, a tablet computer (that is, a pad), a virtual reality (Virtual Reality, VR for short) device, a notebook computer, a personal computer (personal computer, PC), an ultra-mobile personal computer (ultra-mobile personal computer, UMPC), a handheld computer, or an intelligent wearable device.

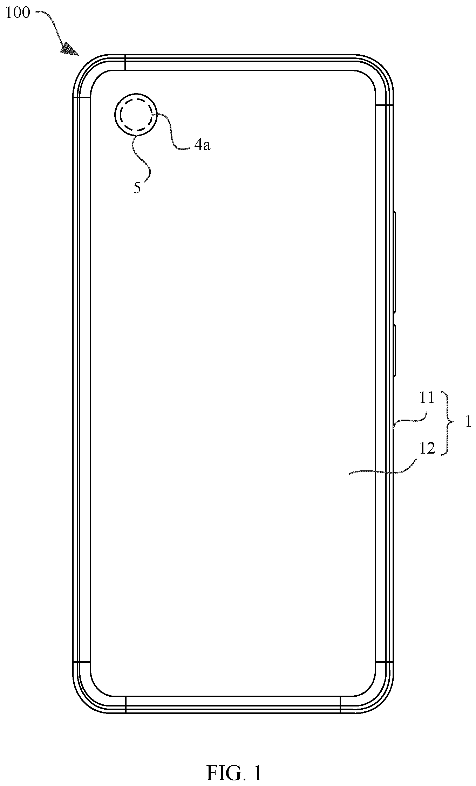

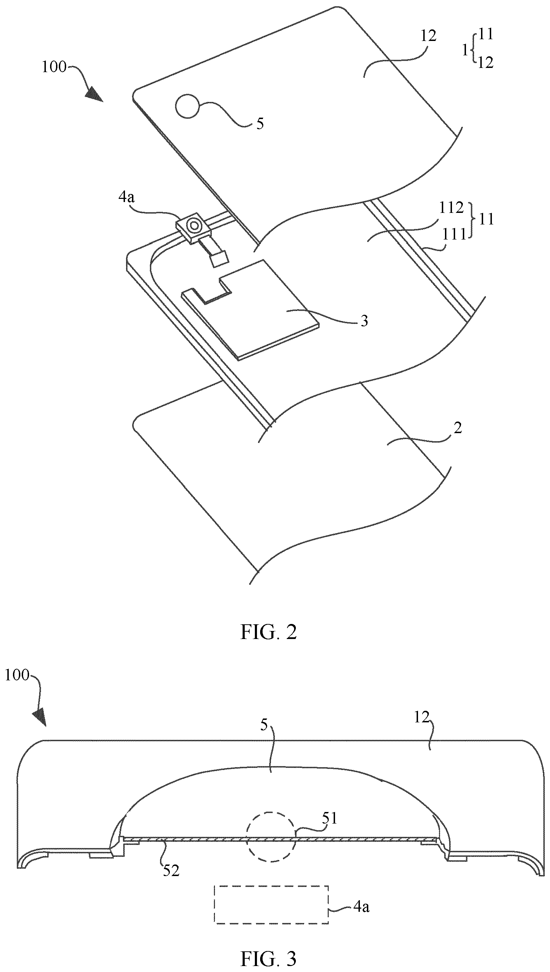

FIG. 1 is a schematic structural diagram of an electronic device 100, and FIG. 2 is a schematic diagram of partial disassembly of an electronic device 100.

Referring to FIG. 1 and FIG. 2, the electronic device 100 provided in this embodiment of this application may include a housing 1. The housing 1 includes a middle frame 11 and a rear cover 12. The rear cover 12 is connected to a side of the middle frame 11 and provides a structural frame to the electronic device 100 together with the middle frame 11.

Still referring to FIG. 2, in some embodiments, the middle frame 11 includes a middle plate 112 and a side frame 111 that are connected to each other. The side frame 111 is disposed around an edge of a circumferential side of the middle plate 112, and forms the middle frame 11 together with the middle plate 112. The side frame 111 is a square ring structure formed by a plurality of side frames 111 connected head to tail. Referring to FIG. 2, in some embodiments, when the electronic device 100 has a display function (for example, the electronic device 100 is a mobile phone), the electronic device 100 further includes a display screen 2. The display screen 2 is mounted on a side on the middle frame 11 opposite to the rear cover 12, so as to implement the display function of the electronic device 100.

It should be noted that, FIG. 1 and FIG. 2 show one middle frame 11. In some embodiments, there may further be two middle frames 11. The two middle frames 11 may be rotationally connected and carry the foldable display screen 2, so that the electronic device 100 is folded and unfolded by means of relative rotation of the two middle frames 11. In this way, while satisfying people's requirement for a large display area of the electronic device 100, the electronic device can be easily carried by a user.

A structure of the electronic device 100 in this application is further described below by using one middle frame 11 as an example.

The display screen 2, the middle frame 11, and the rear cover 12 may jointly enclose to form an accommodating space (not shown in the figure) of the electronic device 100. The accommodating space may be used for accommodating structural members such as a circuit board 3, a camera module 4a, a battery, a microphone, a speaker, and an earphone of the electronic device 100.

The circuit board 3 may be understood as a main board in the electronic device 100 (for example, a mobile phone). The circuit board 3 usually carries electronic elements such as a processor module, various controller modules, a storage module, a communications module, a radio frequency module, and a power management module. The display screen 2 may be electrically connected to the circuit board 3, so that the display screen 2 may implement a display function or an operation function.

The camera module 4a may be disposed on the circuit board 3, and is electrically connected to the circuit board 3, so that when a user enters a photographing instruction, the camera module 4a can be controlled by the circuit board 3 to photograph a target object, thereby implementing a photographing function of the electronic device 100. The camera module 4a may be electrically connected to the circuit board 3 by using an electrical connector (for example, a board-to-board connector).

A structure of the electronic device 100 in this embodiment of this application is further described below by using a mobile phone as an example.

FIG. 2 shows one camera module 4a provided in the electronic device 100. It should be noted that, in an actual application, a quantity of camera modules 4a is not limited to one, and the quantity of camera modules 4a may also be two or more. To enhance photographing performance of the electronic device 100, a plurality of (for example, three, four, or five) camera modules 4a are generally disposed in the electronic device 100. Some camera modules 4a may be disposed on a side of the middle frame 11 facing the display screen 2, to form front-facing camera modules. Other camera modules 4a may be disposed on a side of the middle frame 11 facing the rear cover 12, to form rear-facing camera modules. In this application, specific positions of the front-facing camera module and the rear-facing camera module in the electronic device 100 are not further limited.

The structure of the electronic device 100 of this application is further described below by using a rear-facing camera module as an example.

The camera module 4a may include, but is not limited to, a variable focal length module such as an auto focus (Auto Focus, AF for short) module, a fix focus (Fix Focus, FF for short) module, a wide-angle camera module, a telephoto camera module, a color camera module, or a black and white camera module.

FIG. 3 is a schematic diagram of partial assembly of an optical cover plate 5 on the rear cover 12 in the electronic device 100 in FIG. 2.

Referring to FIG. 3, when the camera module 4a is a rear-facing camera module, to facilitate implementation of a photographing function of the camera module 4a, an opening (not shown in the figure) is provided at a position of the rear cover 12 corresponding to the camera module 4a. The electronic device 100 further includes the optical cover plate 5. The optical cover plate 5 is disposed on a side of the rear cover 12 away from the display screen 2 and covers at the opening of the rear cover 12 to cover on an object side of a camera shot 41 in the camera module 4a. The optical cover plate 5 is usually a glass cover plate. Both the optical cover plate 5 and a covered position of the camera module 4a are provided with a camera hole region 51, so that light outside the electronic device 100 can penetrate the camera hole region 51 and is emitted into the camera shot 41, thereby implementing the photographing function of the camera module 4a. The camera hole region 51 is a transparent region on the optical cover plate 5. A shape of the camera hole region 51 matches with a shape of the camera shot 41. Generally, to increase a light inlet amount of the camera shot 41, the shape of the camera hole region 51 may be larger than the shape of the camera shot 41.

The optical cover plate 5 may further include a non-camera hole region 52, and the non-camera hole region 52 is disposed around an edge of a circumferential side of the camera hole region 51. The non-camera hole region 52 is a non-transparent region on the optical cover plate 5. The camera module 4a may be located on an inner surface of the optical cover plate 5, and is adhered to the non-camera hole region 52 of the optical cover plate 5 by using a buffer adhesive such as a sponge adhesive, so as to fasten the camera module 4a to the optical cover plate 5 and the rear cover 12. The inner surface of the optical cover plate 5 may be understood as a side of the optical cover plate 5 facing the camera module 4a.

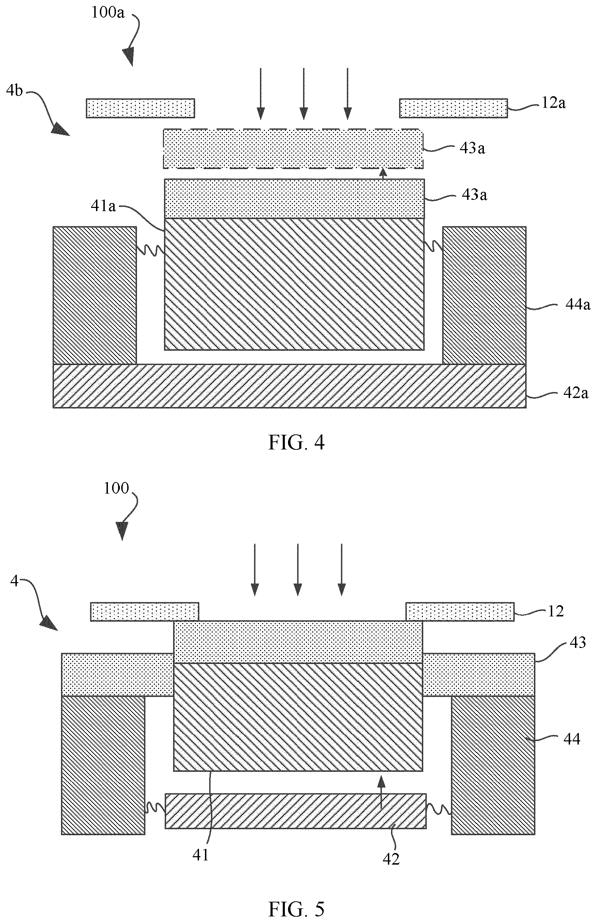

FIG. 4 is a schematic structural diagram of a camera module 4b of an electronic device 100a provided by related art, to facilitate understanding of a structure of the camera module 4b.

Referring to FIG. 4, the camera module 4b includes a camera shot 41a and an image sensor 42a. The camera shot 41a is generally formed by one or more stacked lenses (for example, lenses). The camera shot 41a may be disposed in a drive apparatus 44a, and the image sensor 42a is disposed on an image side of the camera shot 41a. The image sensor 42a is usually electrically connected to the circuit board 3. For example, the image sensor 42a may be electrically connected to the circuit board 3 by using an electrical connector. For details, refer to the foregoing related description of electrical connection between the camera module 4 and the circuit board 3, and details are not described herein again.

Ambient light outside the electronic device 100a may penetrate through the camera hole region (not shown in the figure) of the optical cover plate and the opening on the rear cover 12a, and is emitted into the camera shot 41a, and after being emitted by the camera shot 41a, the ambient light may sequentially pass through an optical filter and the image sensor 42a and is processed by the image sensor 42a to form an image, so as to implement the photographing function of the camera module 4b.

When people hold the electronic device 100a with hands to photograph a target region, device shake is unavoidable. In a process of device shake, different light received by the image sensor 42a in a same position may overlap. Consequently, final imaging is blurred, continuous stability of a video image is deteriorated, and even content of the video cannot be clearly seen.

To overcome impact on the camera module 4b caused by device shake of the electronic device 100a during photographing, most existing electronic devices 100a have an anti-shake function during photographing, so as to improve photographing quality by using the anti-shake function. The anti-shake function of the existing electronic device 100a is mainly implemented through an optical image stabilizer (Optical Image Stabilizer, OIS), and anti-shake through the optical image stabilizer is referred to as OIS optical anti-shake for short.

OIS optical anti-shake supported by most existing electronic devices 100a is mainly OIS optical anti-shake by using the camera shot 41a, and OIS optical anti-shake by using the camera shot 41a is mainly implemented through movable design of the camera shot 41.

The camera shot 41a is movable design in the drive apparatus 44a. Referring to FIG. 4, the camera shot 41a is connected to a drive motor in the drive apparatus 44a, so that the camera shot 41a is driven to move by using the drive motor, to implement an anti-shake and/or autofocus function of the camera module 4b, thereby improving photographing quality. For example, if device shake of the electronic device 100a occurs during photographing, the drive motor may drive the camera shot 41a to translate or rotate in a plane perpendicular to a direction of an optical axis of the camera shot 41a, so as to implement an anti-shake function of the camera module 4b and the electronic device 100a. For another example, during photographing, the drive motor may further drive the camera shot 41a to move along the direction of the optical axis of the camera shot 41a, to implement an autofocus function of the camera module 4b and the electronic device 100a.

In recent years, people have increasingly high requirement on aesthetic appearance of the electronic device 100a and photographing quality of the camera module 4b in the electronic device 100a.

To satisfy people's requirement on photographing quality, referring to FIG. 4, a variable aperture component 43a is usually disposed in the camera module 4b, and the variable aperture component 43a is located on an object side of the camera shot 41a. An aperture hole (not shown in the figure) of the variable aperture component 43a is adjustable design. In a photographing environment with relatively strong light intensity of ambient light, an aperture hole may be reduced, to reduce a light inlet amount of the camera shot 41a, to ensure a deeper depth of field and a clearer image. In a photographing environment with insufficient light intensity of ambient light, an aperture hole may be increased, to increase a light inlet amount of the camera shot 41a, to ensure less noise and a purer image, and highlight an effect of a shallow depth of field (blurred background) of an image main body. In this way, a user can obtain a desirable photographing effect when photographing a target region by using the electronic device 100a, thereby satisfying people's requirement on photographing quality of the camera module 4b in the electronic device 100a.

However, as shown in FIG. 4, the existing variable aperture component 43a is usually fastened on the camera shot 41a. When implementing at least one of an anti-shake function and a focus function of the camera module 4b, the variable aperture component 43a synchronously moves along with the camera shot 41a. As a result, a distance between the variable aperture component 43a and the optical cover plate is variable. When the variable aperture component 43a synchronously moves along with the camera shot 41a, aesthetic appearance of the electronic device 100a is affected and degraded by the optical cover plate, and it is difficult to satisfy people's requirement on the aesthetic appearance of the electronic device 100a.

In view of this, this application provides a camera module 4. The camera module 4 can be applied to an electronic device 100, and implements a photographing function of the electronic device 100. FIG. 5 is a schematic structural diagram of a camera module 4 according to an embodiment of this application. Referring to FIG. 5, in this application, a camera shot 41, a variable aperture component 43, and an image sensor 42 of movable design are disposed in the camera module 4. The camera shot 41 is connected to the variable aperture component 43, and distances between the variable aperture component 43 and the optical cover plate 5 and between the camera shot 41 and the optical cover plate (not shown in the figure) are relatively constant. In this way, by means of the movable design of the image sensor 42, photographing quality of the camera module 4 can be improved, and this avoids that movement of the variable aperture component 43 affects aesthetic appearance of the optical cover plate 5 of the electronic device 100, thereby satisfying people's requirement on aesthetic appearance of the electronic device 100 and photographing quality of the camera module 4.

The following further describes the structure of the camera module 4 of this application with reference to the accompanying drawings and the embodiments.

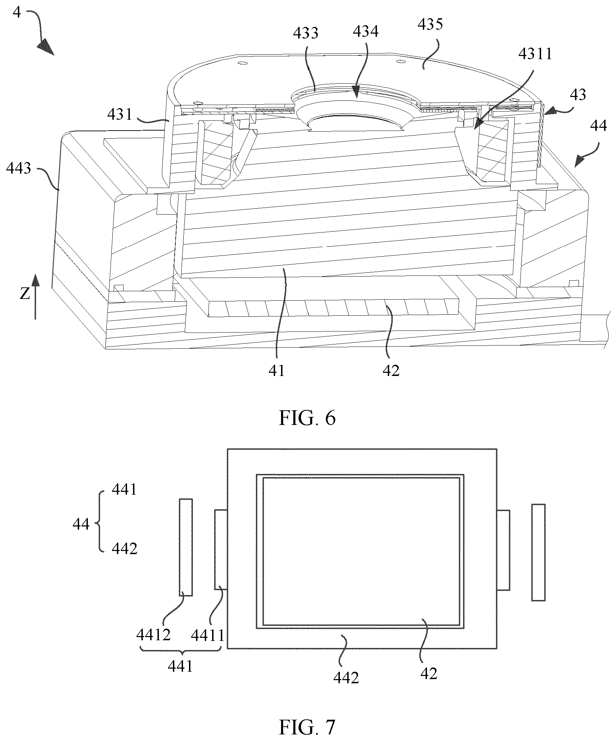

FIG. 6 is a schematic diagram of the inside of a camera module 4 according to an embodiment of this application.

Referring to FIG. 6, the camera module 4 includes a camera shot 41 and a variable aperture component 43. The variable aperture component 43 includes a base 431 and a plurality of blades 433, and the blades 433 are rotationally connected to the base 431 and enclose to form an aperture hole 434 having an adjustable size. The camera shot 41 is fixedly connected to the base 431, so that the camera shot 41 is assembled on the base 431. The camera shot 41 may be fixedly connected to the base 431 by means of clipping, screwing, or in another detachable manner, so as to facilitate detachment of the camera shot 41.

The camera shot 41 includes a plurality of lenses that are stacked. "A plurality of" may be understood as two or more. In some embodiments, while satisfying people's requirement on photographing quality of the camera module 4, the quantity of lenses in the camera shot 41 may further be one or two. In this application, the quantities and types of lenses in the camera shot 41 are not further limited.

The aperture hole 434 is located in a direction of an optical axis of the camera shot 41, so that ambient light outside the electronic device 100 may be emitted into the camera shot 41 through the aperture hole 434, to implement the photographing function of the camera module 4. In addition, the variable aperture component 43 can further adjust a light inlet amount of the camera shot 41 in the camera module 4 by adjusting a size of the aperture hole 434 based on light intensity of the ambient light, thereby helping satisfy people's requirement on photographing quality of the camera module 4 in the electronic device 100. For the direction of the optical axis of the camera shot 41, refer to a Z direction in FIG. 6.

Both the base 431 and the camera shot 41 are fastened relative to an optical cover plate 5 that covers on an object side of the camera shot 41 in the electronic device 100. That is, during photographing of the camera module 4, distances between the base 431 and the optical cover plate 5 and between the camera shot 41 and the optical cover plate are always constant. Because the base 431 is a carrying component for assembling the blade 433 and another structure in the variable aperture component 43, in a photographing process of the camera module 4, a distance between the variable aperture component 43 and the optical cover plate 5 is always constant.

In this way, after passing through the optical cover plate 5, ambient light outside the electronic device 100 can enter the aperture hole 434 and the camera shot 41, so as to implement the photographing function of the camera module 4 and an adjustment function of the variable aperture component 43 for a light inlet amount of the camera shot 41 in the camera module 4. In addition, because distances between the variable aperture component 43 and the optical cover plate 5 and between the camera shot 41 and the optical cover plate are always constant, the appearance of the optical cover plate 5 of the electronic device 100 is always consistent, and there is desirable aesthetic effect, thereby satisfying people's requirement on aesthetic appearance of the electronic device 100 and photographing quality of the camera module 4.

The camera shot 41 may be located in the corresponding camera hole region 51 on the optical cover plate 5, so that external ambient light can be emitted into the camera shot 41 through the camera hole region 51, to implement the photographing function of the camera module 4. For a structure of the optical cover plate 5 and assembly of the optical cover plate on the electronic device 100, refer to the foregoing related description, and details are not described herein again.

Referring to FIG. 6, the image sensor 42 is located on an image side of the camera shot 41, and is movably disposed relative to the camera shot 41, so that ambient light emitted by the camera shot 41 can enter the image sensor 42, and is processed by the image sensor 42 to form an image, thereby implementing a photographing function of the camera module 4.

During photographing of the camera module 4, movement of the image sensor 42 relative to the camera shot 41 can help implement an anti-shake and/or an autofocus function (at least one of the anti-shake function and the autofocus function) of the camera module 4 and the electronic device 100, so as to satisfy people's requirement on aesthetic appearance of the electronic device 100 and photographing quality of the camera module 4.

The base 431 has an accommodating space 4311 communicating with the aperture hole 434, and at least a part of the camera shot 41 is located in the accommodating space 4311, so that while the camera shot 41 is conveniently assembled in the base 431, ambient light outside the electronic device 100 is conveniently emitted into the camera shot 41 because the accommodating space 4311 communicates with the aperture hole 434. Two ends of the accommodating space 4311 along the direction of the optical axis of the camera shot 41 are both open ends, so that the aperture hole 434 communicates with the accommodating space 4311 to emit ambient light in or out.

One end of the camera shot 41 away from the image sensor 42 is a top end, and one end of the camera shot 41 close to the image sensor 42 is a bottom end. Referring to FIG. 6, in some embodiments, the top end of the camera shot 41 may be accommodated in the accommodating space 4311, the bottom end of the camera shot 41 may be located outside the accommodating space 4311, and an edge of a circumferential side of the bottom end of the camera shot 41 may be connected, by means of clipping, screwing, or in another detachable manner, to an end of the base 431 facing the image sensor 42, so that when the camera shot 41 is disassembled, a size of the base 431 can be reduced.

Alternatively, in some embodiments, the camera shot 41 may be entirely accommodated in the accommodating space 4311, and a circumferential side of the camera shot 41 may be connected to an inner wall of the accommodating space 4311 by means of clipping, screwing, or in another detachable manner, so as to facilitate detachment of the camera shot 41. In this application, a manner of fixedly fastening the camera shot 41 in the base 431 is not further limited.

The image sensor 42 is located outside the accommodating space 4311, so as to implement movement disposing of the image sensor 42.

In some embodiments, the image sensor 42 may be movably disposed relative to the camera shot 41 along the direction of the optical axis of the camera shot 41, so that the image sensor 42 performs focus, and an autofocus function of the camera module 4 and the electronic device 100 is implemented through movement of the image sensor 42.

Alternatively, in some other embodiments, the image sensor 42 may be movably disposed relative to the camera shot 41 in a plane perpendicular to the direction of the optical axis of the camera shot 41, so that the image sensor 42 provides shake compensation, and an anti-shake function of the camera module 4 and the electronic device 100 is implemented through movement of the image sensor 42.

Alternatively, in some embodiments, the image sensor 42 not only can be movably disposed relative to the camera shot 41 along the direction of the optical axis of the camera shot 41, but also can be movably disposed relative to the camera shot 41 in the plane perpendicular to the direction of the optical axis of the camera shot 41, so that the camera module 4 and the electronic device 100 have both the autofocus function and the anti-shake function.

FIG. 7 is a principle diagram of movement of an image sensor 42.

Referring to FIG. 6 and FIG. 7, to implement movement of the image sensor 42, the camera module 4 further includes a drive apparatus 44. The drive apparatus 44 includes a drive component 441 and a carrying component 442 carrying the image sensor 42. The carrying component 442 and the drive component 441 may form a drive motor of the drive apparatus 44. The carrying component 442 is connected to the drive component 441, and is configured to be driven by the drive component 441 to move relative to the camera shot 41 along a direction of an optical axis of the camera shot 41 and/or in a plane perpendicular to the direction of the optical axis of the camera shot 41, and drive the image sensor 42 to synchronously move relative to the camera shot 41. In this way, the carrying component 442 is driven by the drive component 441, and the image sensor 42 is driven by the carrying component 442 to move relative to the camera shot 41, to implement an autofocus and/or anti-shake function of the camera module 4.

Referring to FIG. 7, in some embodiments, the carrying component 442 has a mounting hole (not shown in the figure) for accommodating the image sensor 42. The image sensor 42 may be accommodated in the mounting hole. The carrying component 442 is connected to the image sensor 42 in a detachable manner such as clipping or screwing, so that the image sensor 42 is fastened on the carrying component 442, and the image sensor 42 is driven by the carrying component 442 to synchronously move. Alternatively, in some embodiments, the carrying component 442 may be located on a side of the image sensor 42 away from the camera shot 41, and may be connected to the image sensor 42 in a detachable manner such as clipping or screwing. In this application, a position of disposing the image sensor 42 on the carrying component 442 is not further limited.

The drive component 441 may be located on a circumferential side of the carrying component 442, so that the carrying component 442 is driven by the drive component 441 to move relative to the camera shot 41. The drive component 441 may be a conventional voice coil drive structure, a shape memory alloy drive structure, a piezoelectric drive structure, or another drive structure. In this application, the structure of the drive component 441 is not further limited.

Movement of the image sensor 42 in this application is further described below by using a conventional voice coil drive structure as an example.

Referring to FIG. 7, the drive component 441 may include a drive coil 4411 and a drive magnetic body 4412. The drive magnetic body 4412 is usually a magnet 4363. The drive coil 4411 may be disposed on a circumferential side of the carrying component 442, and the drive magnetic body 4412 may be disposed on a side of the drive coil 4411 away from the carrying component 442 and is disposed opposite to the drive coil 4411. The drive magnetic body 4412 and the drive coil 4411 may be located on a same side of the carrying component 442. The drive coil 4411 and the drive magnetic body 4412 can sense each other during power on, and an electromagnetic force is generated, so as to drive, by means of the electromagnetic force, the carrying component 442 to move relative to the camera shot 41, and drive the image sensor 42 to synchronously move.

For example, when the body of the electronic device 100 shakes during photographing, the electromagnetic force generated when the drive coil 4411 and the drive magnetic body 4412 sense each other may drive the carrying component 442 to translate or rotate in a plane perpendicular to the direction of the optical axis of the camera shot 41, so that the carrying component 442 drives the image sensor 42 to synchronously translate or rotate in the plane perpendicular to the direction of the optical axis of the camera shot 41, to compensate for shake on the body of the electronic device 100 through movement of the image sensor 42, so as to implement the anti-shake function of the camera module 4 and the electronic device 100.

For example, during the photographing process, the electromagnetic force generated when the drive coil 4411 and the drive magnetic body 4412 sense each other may further drive the carrying component 442 to move along the direction of the optical axis of the camera shot 41, so as to drive, by using the carrying component 442, the image sensor 42 to synchronously move along the direction of the optical axis of the camera shot 41, to implement the autofocus function of the camera module 4 and the electronic device 100.

Alternatively, in some other embodiments, the drive magnetic body 4412 may be disposed on a circumferential side of the carrying component 442, and the drive coil 4411 may be disposed on a side of the drive magnetic body 4412 away from the image sensor 42. In this way, the drive coil 4411 and the drive magnetic body 4412 sense each other, so that the carrying component 442 can also be driven to move along the direction of the optical axis of the camera shot 41 or move in a plane perpendicular to a direction of an optical axis of the camera shot 41, thereby implementing the anti-shake function and the autofocus function of the camera module 4 and the electronic device 100.

For a shape memory alloy drive structure, a piezoelectric drive structure, and a driving principle for the image sensor 42, refer to related description in the prior art. Details are not described herein again.

To enhance stability of the carrying component 442 during movement, there may be two drive components 441, and the two drive components 441 may be symmetrically disposed in a circumferential direction of the carrying component 442. Alternatively, in some embodiments, there may be a plurality of drive components 441, and the plurality of drive components 441 may be evenly distributed on the circumferential direction of the carrying component 442.

The drive apparatus 44 may further include a drive housing 443 (shown in FIG. 6), the drive housing 443 has a cavity (not shown in the figure), and the carrying component 442 and the drive component 441 are both disposed in the cavity, to implement assembly of the image sensor 42 and the drive component 441 in the drive housing 443 and the camera module 4. A side of the drive housing 443 facing the camera shot 41 has a light inlet hole (not shown in the figure), and the light inlet hole communicates with the cavity, so that ambient light emitted out of the camera shot 41 can pass through the light inlet hole and received by the image sensor 42, thereby facilitating implementation of the photographing function of the camera module 4.

When the drive magnetic body 4412 may be disposed on a side of the drive coil 4411 away from the carrying component, the drive magnetic body 4412 may be disposed on an inner wall of the drive housing 443, so as to facilitate implementation of assembly of the drive magnetic body 4412 in the drive apparatus 44.

As shown in FIG. 6, when a top end of the camera shot 41 is located in the base 431, a bottom end of the camera shot 41 may be threaded in the drive housing 443 through the light inlet hole, so that the size of the base 431 can be reduced while the camera shot 41 is assembled in the camera module 4. In this case, the base 431 and the drive housing 443 have a split structure.

Alternatively, in some embodiments, the base 431 and the drive housing 443 have an integrated structure. Specifically, an end of the base 431 may further extend toward a side of the image sensor 42. A part of the base 431 that accommodates the drive component and the image sensor 42 may form the drive housing 443, so that the camera shot 41 is completely accommodated in the base 431.

The structure of the camera module 4 in this application is further described below by using an example in which the base 431 and the drive housing 443 have a split structure.

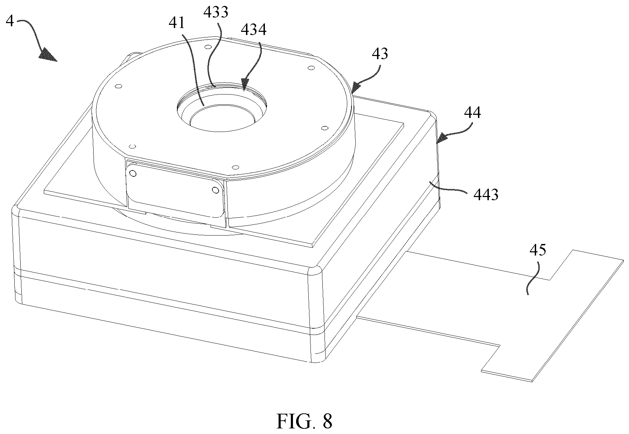

FIG. 8 is a schematic diagram of an external structure of a camera module 4.

The base 431 is located on a side of the drive housing 443 facing the optical cover plate 5, so as to implement assembly and fastening of the variable aperture component 43 and the camera shot 41 on the camera module 4. Assembly of the base 431 on the drive housing 443 is shown in FIG. 8.

The camera module 4 further includes a filter (not shown in the figure). The optical filter and the image sensor 42 (not shown in the figure) are sequentially disposed on the image side of the camera shot 41 along the direction of the optical axis of the camera shot 41, so that ambient light emitted by the camera shot 41 can sequentially pass through the optical filter and the image sensor 42, and finally is processed by the image sensor 42 to form an image, thereby implementing a photographing function of the camera module 4.

The image sensor 42 may be electrically connected to the circuit board 3 of the electronic device 100 by using an electrical connector. To implement that the camera module 4 is electrically connected to the circuit board 3, the camera module 4 may further include a drive circuit board 45, and the image sensor 42 may be electrically connected to the circuit board 3 of the electronic device 100 by using the drive circuit board 45, so as to implement signal transmission between the image sensor 42 in the camera module 4 and the circuit board 3. The drive circuit board 45 may be electrically connected to the circuit board 3 by using an electrical connector (for example, a board-to-board electrical connector).

Referring to FIG. 8, in some embodiments, the blade 433 may be located on the object side of the camera shot 41, so that the aperture hole 434 is located on the object side of the camera shot 41, to adjust a light inlet amount of each lens in the camera shot 41. In this case, the blades 433 may be disposed on a side of the base 431 away from the image sensor 42.

The center of the aperture hole 434 is located on the optical axis of the camera shot 41. In this way, the center of the aperture hole 434 can be aligned with the center of each lens in the camera shot 41, so that when adjusting the size of the aperture hole 434, the variable aperture component 43 can better adjust light inlet amounts of at least some lenses in the camera module 4, to satisfy people's requirement on photographing quality of the camera module 4.

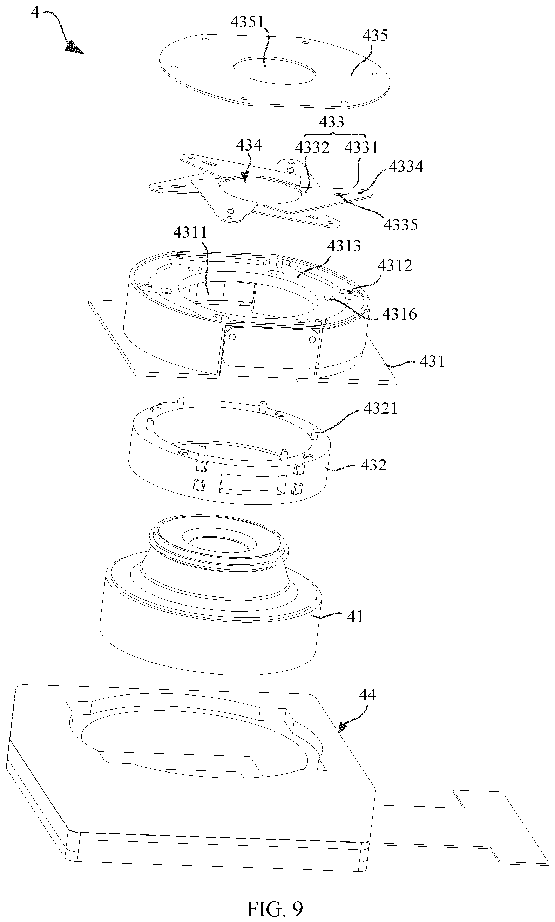

FIG. 9 shows an exploded view of the camera module 4 in FIG. 8, to better understand the structure of the camera module 4.

Referring to FIG. 9, six blades 433 are shown. In some embodiments, a quantity of blades 433 may alternatively be eight, ten, or the like. In this application, a quantity of the blades 433 is not further limited. The blades 433 are rotationally connected to the base 431 and enclose to form the aperture hole 434.

A position of the base 431 corresponding to each of the blades 433 is provided with a connecting column 4312. That is, a quantity of the connecting columns 4312 is relative to and in a one-to-one correspondence with a quantity of the blades 433. A first end 4331 of the blade 433 is threaded on a corresponding connecting column 4312 and rotates relative to the base 431 around the connecting column 4312, so that the blade 433 has an axial fit with the base 431. A central axis of the connecting column 4312 forms a rotation axis of the blade 433, so that the blade 433 being rotationally connected to the base 431 is implemented through connection between the first end 4331 of the blade 433 and the connecting column 4312.

A perforation hole 4334 is provided at the first end 4331 of the blade 433. The connecting column 4312 may pass through the perforation hole 4334, and has a gap fit with the perforation hole 4334, so that the blade 433 rotates around the connecting column 4312.

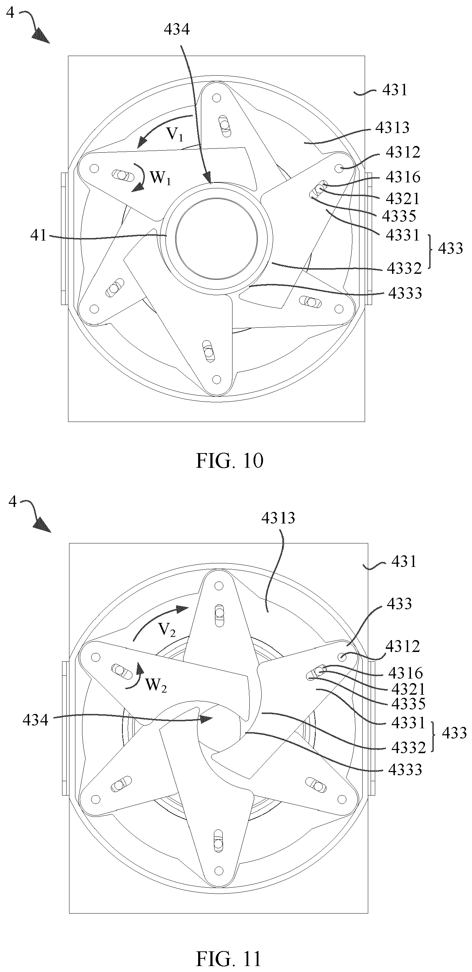

FIG. 10 shows a structural view of an aperture hole 434 of a variable aperture component 43 under a first hole diameter in FIG. 8. Under the first hole diameter, the aperture hole 434 has a relatively large hole diameter. FIG. 11 shows a structural view of an aperture hole 434 of a variable aperture component 43 under a second hole diameter in FIG. 8. Under the second hole diameter, the aperture hole 434 has a relatively small hole diameter.

Referring to FIG. 10 and FIG. 11, a second end 4332 of each of the blades 433 encloses to form the aperture hole 434, and synchronously rotates along with the first end 4331 of the blade 433 when the first end 4331 of the blade 433 rotates around the connecting column 4312, to adjust the size of the aperture hole 434, so that the size of the aperture hole 434 is adjusted by rotating the blade 433 around the connecting column 4312.

For example, when the first end 4331 of each blade 433 rotates around the connecting column 4312 relative to the base 431 along a direction W₁, the second end 4332 of each blade 433 also rotates relative to the base 431 along the direction W₁, to adjust the aperture hole 434 from the first hole diameter to the second hole diameter, to reduce the hole diameter of the aperture hole 434. For another example, when the first end 4331 of each blade 433 rotates around the connecting column 4312 relative to the base 431 along a direction W₂, the second end 4332 of each blade 433 also rotates relative to the base 431 along the direction W₂, to adjust the aperture hole 434 from the second hole diameter to the first hole diameter, to increase the hole diameter of the aperture hole 434. The direction W₂ and the direction W₁ are opposite. Therefore, by changing the rotation direction of the blade 433, the hole diameter of the aperture hole 434 may be increased or decreased.

It should be noted that, the aperture hole 434 is not only a conventional circular hole. In addition to the circular hole, the aperture hole 434 may further include a non-circular hole shown in FIG. 11.

As shown in FIG. 10 and FIG. 11, an end surface of the base 431 perpendicular to the direction of the optical axis of the camera shot 41 is provided with a groove body 4313, the connecting column 4312 is located at the bottom of the groove body 4313, and the blade 433 is embedded in the groove body 4313, so that while the blade 433 is rotationally connected to the base 431, a rotation angle of the blade 433 relative to the base 431 can be limited by using the groove body 4313, to avoid excessive rotation of the blade 433.

In addition, the blade 433 is embedded in the groove body 4313, so that thicknesses of the variable aperture component 43 and the camera module 4 can also be reduced, so as to reduce an assembly space of the camera module 4 in the housing 1, thereby facilitating lightweight of the electronic device 100.

The plurality of blades 433 are evenly distributed on the base 431 along the circumferential direction of the camera shot 41, and are all located in the plane perpendicular to the direction of the optical axis of the camera shot 41, so that the plurality of blades 433 enclose to form the closed aperture hole 434 on the base 431.

The second end 4332 of the blade 433 may have an arc-shaped gap 4333 matching with a circumferential side wall of the camera shot 41, and a circle center of the arc-shaped gap 4333 is located on the optical axis of the camera shot 41. Second ends 4332 of two adjacent blades 433 along the circumferential direction of the camera shot 41 may be alternately stacked together in the direction of the optical axis of the camera shot 41, so that when the plurality of blades 433 are evenly distributed on the base 431 along the circumferential direction of the camera shot 41, the second ends 4332 of the blades 433 may jointly enclose to form the closed aperture hole 434 at the arc-shaped gap 4333.

In some embodiments, the variable aperture component 43 further includes a limiting cover plate 435. The limiting cover plate 435 may cover the blade 433 (as shown in FIG. 9), and is fixedly connected to the base 431, so that the limiting cover plate 435 limits movement of the blade 433 in the direction of the optical axis of the camera shot 41, to prevent the blade 433 from falling out of the base 431 when the blade rotates relative to the base 431.

A position of the limiting cover plate 435 corresponding to the aperture hole 434 may be provided with an open hole 4351. A hole diameter of the open hole 4351 may be greater than a maximum hole diameter of the aperture hole 434, so that while ambient light outside the electronic device 100 can be emitted into the aperture hole 434 through the open hole 4351, the variable aperture component 43 can adjust a light inlet amount.

As shown in FIG. 9, the variable aperture component 43 includes a rotor 432. The rotor 432 is rotationally disposed in the base 431 and is connected to each of the blades 433, so that when rotating relative to the base 431, the rotor drives the blade 433 to rotate relative to the base 431 around a rotation axis of the blade (a rotation axis of the blade 433), to adjust a size of the aperture hole 434. Therefore, when driven by the rotor 432, the blade 433 can rotate relative to the base 431 around the rotation axis of the blade, so that the size of the aperture hole 434 can be adjusted, so as to satisfy people's requirement on photographing quality of the camera module 4.

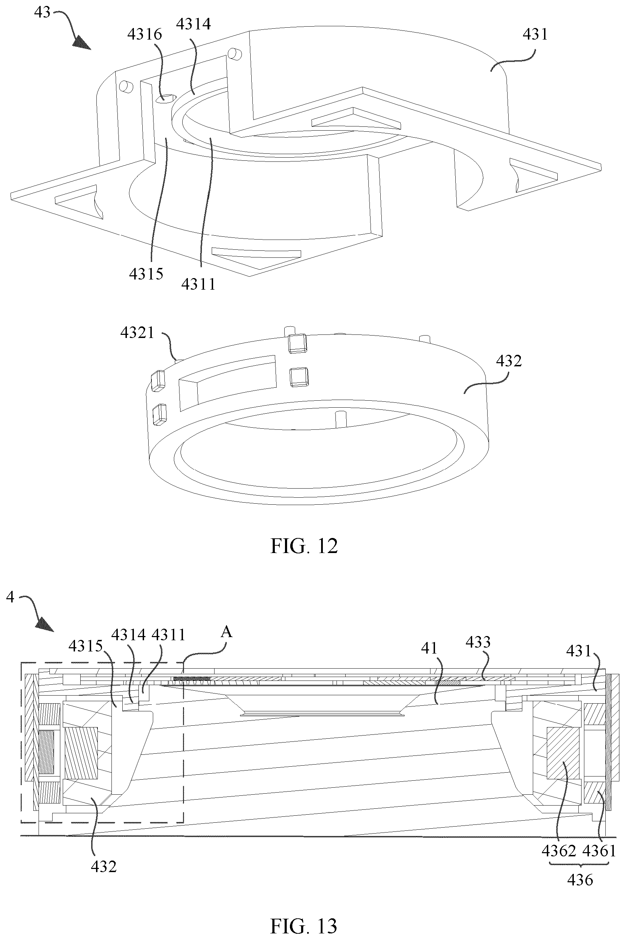

FIG. 12 is a schematic diagram of an assembly process of the rotor 432 on the base 431. Structures fixedly connected to the base 431 and the rotor 432 are omitted in the figure, to simplify the structure of the figure. FIG. 13 is a diagram of partial assembly of a camera shot 41 in a variable aperture component 43 according to an embodiment of this application.

Referring to FIG. 12 and FIG. 13, a mounting slot 4315 is provided in the base 431, and the rotor 432 is fastened in the mounting slot 4315 and rotates relative to the base 431. That is, the rotor 432 is dynamically fastened in the mounting slot 4315, so that when rotating relative to the base 431, the rotor 432 can drive the blade 433 to rotate relative to the base 431 around the connecting column 4312, to adjust the size of the aperture hole 434. In addition, the rotor 432 can be fastened in the base 431, to prevent the rotor 432 from getting out of the opening of the mounting slot 4315 and getting out of the base 431, thereby improving stability of connection between the rotor 432 and the blade 433, and making photographing quality of the camera module 4 more stable.

The mounting slot 4315 is located on a circumferential side of the accommodating space 4311 of the base, so that when the rotor 432 is rotationally disposed in the base 431, accommodating of the camera shot 41 in the base 431 is not affected.

To facilitate connection between the rotor 432 and the blade 433, the mounting slot 4315 may be disposed at one end of the base 431 facing the blade 433. The base 431 has an assembly cavity (not shown in the figure) that is open at two ends. A separator 4314 is provided on a cavity wall at one end of the assembly cavity facing the blade 433. The separator 4314 is disposed around the opening of the base 431, to separate the assembly cavity into the accommodating space 4311 and the mounting slot 4315.

To help the camera shot 41 be fixedly connected to the base 431, a height of the separator 4314 may be less than a depth of the assembly cavity, so that the mounting slot 4315 communicates with the accommodating space 4311, and an end of the camera shot 41 may extend to a side of the mounting slot 4315 and be fixedly connected to an end of the base 431. Directions of the height of the separator 4314 and the depth of the assembly cavity are both parallel to the direction of the optical axis of the camera shot 41. For details, refer to the direction Z in FIG. 6.

Referring to FIG. 13, the variable aperture component 43 further includes at least one voice coil drive module 436, the voice coil drive module 436 includes a coil 4361 and a magnetic body 4362, and the magnetic body 4362 is fixedly connected to a circumferential side wall of the rotor 432, so as to implement fastened assembly of the magnetic body 4362 on the rotor 432. For example, the magnetic body 4362 may be adhered to the circumferential side wall of the rotor 432 by means of adhesion, clipping, or in another manner.

The coil 4361 is located in a position of the base 431 corresponding to the magnetic body 4362, and the coil and the magnetic body 4362 sense each other during power on, to drive the rotor 432 to rotate relative to the base 431. In this way, by means of interaction between the coil 4361 and the magnetic body 4362, the rotor 432 can be rotationally disposed in the base 431, so that while the rotor 432 is dynamically fastened in the base 431, the rotor 432 can drive the blade 433 to rotate around the connecting column 4312 relative to the base 431, to adjust the size of the aperture hole 434.

When the coil 4361 is located in the position of the base 431 corresponding to the magnetic body 4362, there is an overlapping region between an orthographic projection of the coil 4361 on the magnetic body 4362 and the magnetic body 4362. In this way, when the coil 4361 is powered, under the effect of a magnetic field generated by the magnetic body 4362, the coil 4361 and the magnetic body 4362 sense each other, and generate an electromagnetic force that is tangent to a circumferential direction of the rotor 432, so that under the effect of the electromagnetic force, the rotor 432 can be driven to rotate relative to the base 431.

It should be noted that, by changing strength and polarity of a current in the coil 4361, a magnitude and a direction of the electromagnetic force can be changed, so as to change a rotation direction of the rotor 432 on the base 431, so that the rotor 432 drives the blade 433 to rotate to increase or decrease the aperture hole 434.

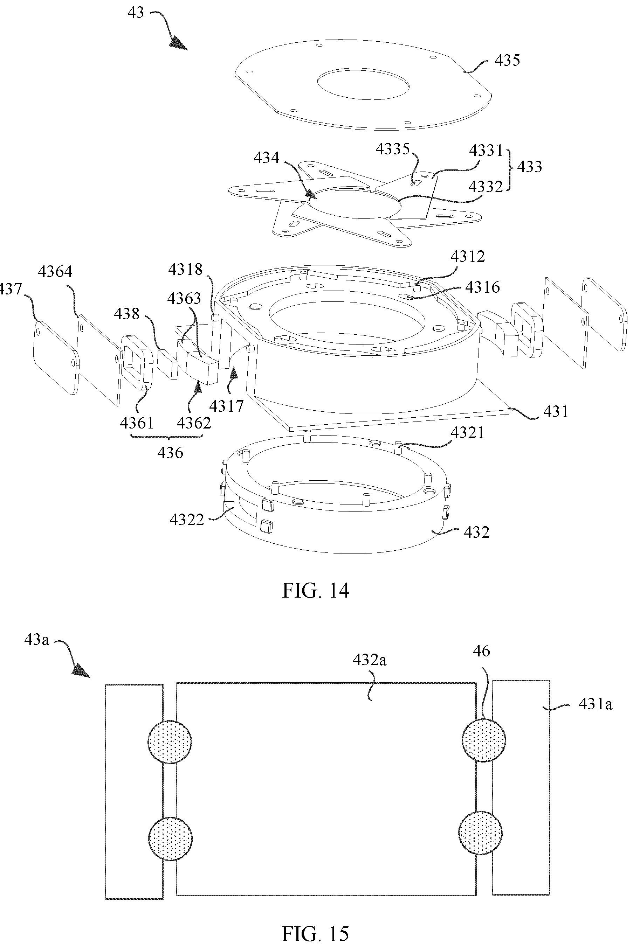

FIG. 14 is an exploded view of a variable aperture component 43 according to an embodiment of this application, to understand a structure of the variable aperture component 43.

Referring to FIG. 14, the magnetic body 4362 is generally a magnet 4363, and a quantity of magnets 4363 in the magnetic body 4362 may be one, two, or the like. When the magnetic body 4362 includes two magnets 4363, magnetization directions of the two magnets 4363 are opposite, that is, N-poles and S-poles of the two magnets 4363 are arranged in opposite directions, so that the coil 4361 and the two magnets 4363 sense each other after power on, and the rotor 432 can be driven to rotate relative to the base 431. In this application, a quantity of magnets 4363 in the magnetic body 4362 and a magnetization direction are not further limited.

The rotor 432 slides relative to the blade 433 when rotating relative to the base 431, and drives the blade 433 to rotate relative to the base 431 around a rotation axis of the blade (a central axis of the connecting column 4312), to adjust a size of the aperture hole 434 to adjust light inlet amounts of lenses in the camera shot 41.

Referring to FIG. 14, a position of the rotor 432 corresponding to each of the blades 433 is provided with a sliding part 4321. The sliding part 4321 may be a cylindrical structure or a protrusion on the rotor 432. In this application, a structure of the sliding part 4321 is not further limited. A position of the base 431 corresponding to each sliding part 4321 is provided with an avoidance hole 4316, and a position of the blade 433 corresponding to the sliding part 4321 is provided with a sliding hole 4335. The sliding part 4321 passes through the avoidance hole 4316 and the sliding hole 4335 in sequence, and slides relative to the blade 433 in the sliding hole 4335 when rotating relative to the base 431 along with the rotor 432, so as to drive the blade 433 to rotate relative to the base 431 around the rotation axis of the blade (a central axis of the connecting column 4312), so that the size of the aperture hole 434 is adjusted through rotation of the blade 433.

As shown in FIG. 14, the sliding hole 4335 may be a strip-shaped hole whose end extends towards a side of the aperture hole 434, so that when the rotor 432 rotates relative to the base 431, the sliding part 4321 may slide in the sliding hole 4335 along an extension direction of the end of the sliding hole 4335, and push the blade 433 to rotate relative to the base 431 around the connecting column 4312, to adjust the size of the aperture hole 434. The strip-shaped hole in a length direction of the sliding hole 4335 may include, but is not limited to, an oblong hole shown in FIG. 15. The sliding hole 4335 may be located on a side of the perforation hole 4334 of the blade 433 facing the aperture hole 434. The sliding part 4321 is threaded in the sliding hole 4335, and has a gap fit with the sliding hole 4335, so that the sliding part 4321 moves in the sliding hole 4335.

In some embodiments, the sliding hole 4335 may alternatively be an arc-shaped hole whose end extends towards a side of the aperture hole 434. In this application, the shape of the sliding hole 4335 is not further limited.

The structure of the camera module 4 in this application is further described below by using a strip-shaped hole as an example.

Referring to FIG. 14, the avoidance hole 4316 is an arc-shaped hole disposed along a rotation track of the sliding part 4321. A length of the arc-shaped hole is greater than an outer diameter of the sliding part 4321, so that when the rotor 432 rotates relative to the base 431, the sliding part 4321 can move along with the rotor 432 in the avoidance hole 4316, thereby driving the blade 433 to rotate around the central axis of the connecting column 4312, to adjust the size of the aperture hole 434. The avoidance hole 4316 communicates with the mounting slot 4315 of the base 431, so that when the rotor 432 is in the mounting slot 4315, the sliding part 4321 can be threaded in the sliding hole 4335 through the avoidance hole 4316.

A process of adjusting the aperture hole 434 is further described below with reference to different application scenarios.

If photographing is performed in a photographing environment with relatively strong light intensity of ambient light, the voice coil drive module 436 may control the rotor 432 to rotate relative to the base 431 around the central axis of the rotor 432 along a direction V₁ in FIG. 10. When the rotor 432 rotates, the sliding part 4321 also rotates in the avoidance hole 4316 along with the rotor 432 along the direction V₁. Besides, the sliding part 4321 slides along the sliding hole 4335 in the rotation process, and is in contact with and pushes the threaded first end 4331 of the blade 433 to rotate relative to the base 431 around the central axis of the connecting column 4312 along the direction W₁. When the first end 4331 of the blade 433 rotates around the central axis of the connecting column 4312 relative to the base 431, the second end 4332 of the blade 433 also rotates relative to the base 431 along the direction W₁. After the rotor 432 rotates to a preset angle, the second end 4332 of the blade 433 also stops rotating, and the aperture hole 434 is adjusted from the first hole parameter shown in FIG. 10 to the second hole parameter shown in FIG. 11, to reduce the hole parameter of the aperture hole 434, so as to reduce a light inlet amount of the camera shot 41 in the camera module 4, ensure a deeper depth of field and a clearer image, and obtain better photographing quality.

Similarly, if photographing is performed in a photographing environment with relatively week or insufficient light intensity of ambient light, the voice coil drive module 436 may control the rotor 432 to rotate relative to the base 431 around the central axis of the rotor 432 along a direction V₂ in FIG. 11. Besides, when the rotor 432 rotates, the sliding part 4321 drives the threaded blade 433 to rotate relative to the base 431 along the direction W₂. The direction V₂ and the direction V₁ are opposite, and the direction W₂ and the direction W₁ are opposite. After the rotor 432 rotates to a preset angle, the aperture hole 434 is adjusted from the second hole parameter shown in FIG. 11 to the first hole parameter shown in FIG. 10, to increase the hole parameter of the aperture hole 434, so as to increase a light inlet amount of the camera shot 41 in the camera module 4, to ensure less noise and a purer image, highlight an effect of a shallow depth of field (blurred background) of an image main body, and obtain better photographing quality.

Referring to FIG. 14, a circumferential side wall of the rotor 432 has an assembly slot 4322, and the magnetic body 4362 is embedded in the assembly slot 4322, so that while the magnetic body 4362 is fixedly connected to the rotor 432 in the assembly slot 4322 by means of adhesion, clipping, or in another manner, a length of the variable aperture component 43 in a radial direction of the rotor 432 can be reduced, thereby facilitating miniaturization of the variable aperture component 43 and the camera module 4.

A shape of the assembly slot 4322 is the same as that of the magnetic body 4362, so that when the magnetic body 4362 is embedded in the assembly slot 4322, mounting of the magnetic body 4362 on the rotor 432 can be limited by using the assembly slot 4322.

A position of the circumferential side wall of the base 431 corresponding to the magnetic body 4362 has a gap 4317, and the coil 4361 is located in the gap 4317 and has a clearance from the magnetic body 4362, so that by disposing the gap 4317, the coil 4361 is disposed opposite to the magnetic body 4362. In this way, the coil 4361 and the magnetic body 4362 sense each other, to drive the rotor 432 to rotate relative to the base 431. In addition, by disposing the gap 4317, mounting of the coil 4361 on the base 431 can further be limited.

A shape of the gap 4317 is the same as an outer edge contour of the coil 4361, so that the coil 4361 can be accommodated in the gap 4317. While the coil 4361 is limited by using the gap 4317, a size of the gap 4317 can be reduced, to avoid that the gap 4317 is excessively large and this affects the structural strength of the base 431.

FIG. 15 is a schematic structural diagram of a variable aperture component 43a provided in the related technology. This figure only shows fastening of a rotor 432a of the variable aperture component 43a on a base 431a.

Referring to FIG. 15, a plurality of balls 46 are generally disposed in the variable aperture component 43a in the related technology. Strip-shaped slots (not shown in the figure) are disposed on both a circumferential side of the rotor 432a and a face opposite to an inner wall of the base 431a. A track slot (not shown in the figure) for rolling of the balls 46 is formed between two strip-shaped slots. The plurality of balls 46 are embedded in the track slot, to implement connection and fastening of the rotor 432a in the base 431a. Alternatively, in the related technology, the rotor 432a may be fastened in the base 431a by using a spring. As a result, assembly of the rotor 432a in the base 431a is relatively complex, a structure of the variable aperture component 43a is relatively complex, and manufacturing costs of the variable aperture component 43a are relatively high.

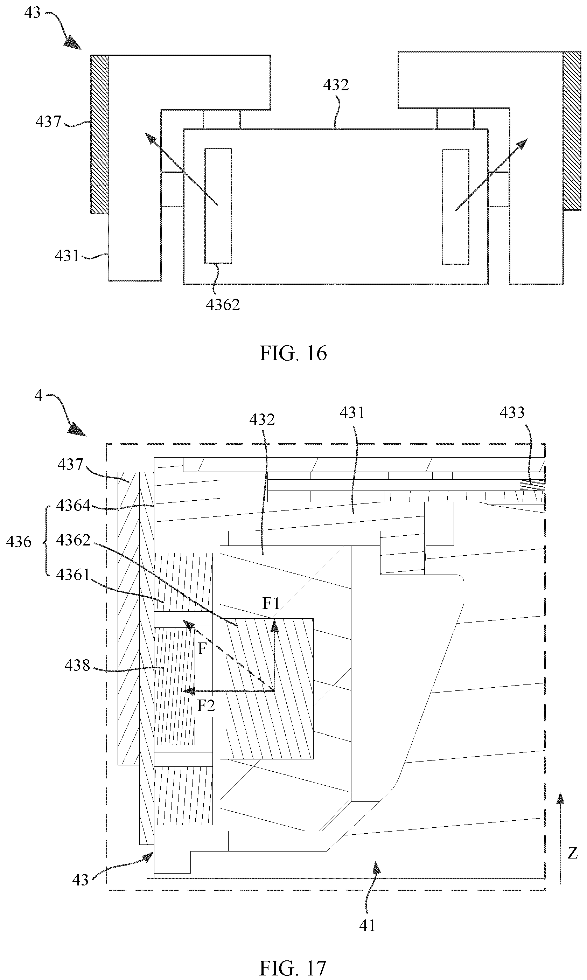

FIG. 16 is a schematic diagram of assembly of a rotor 432 in a base 431.

Therefore, in this embodiment of this application, fastening of the variable aperture component 43 in the base 431 is improved. Referring to FIG. 16, in this application, the rotor 432 is fastened in the base 431 through an attracting force between the magnetic guide piece 437 in the variable aperture component 43 and the magnetic body 4362 on the rotor 432, so that the rotor 432 is fastened in the base 431. In addition, while rotation of the rotor 432 in the base 431 is not affected, the variable aperture component 43 has a feature of a simple structure.

FIG. 17 is an enlarged view of a part A of the variable aperture component 43 in FIG. 13.

Referring to FIG. 16 and FIG. 17, the voice coil drive module 436 further includes a flexible circuit board 4364 disposed on the base 431, and the coil 4361 is located on a side of the flexible circuit board 4364 facing the magnetic body 4362, so as to provide a carrying component for fastening the coil 4361 on the base 431 by using the flexible circuit board 4364.

The variable aperture component 43 further includes a magnetic guide piece 437 pressed on the flexible circuit board 4364, the magnetic guide piece 437 is on the circumferential side wall of the base 431 and is located on a side of the magnetic body 4362 facing the blade 433, and the magnetic guide piece 437 is configured to attract the magnetic body 4362, so that the rotor 432 is suspended in the base 431. The magnetic guide piece 437 may include, but is not limited to, a sheet-like structure that is made by using a magnetic guide material (such as iron or silicon). In this way, the magnetic guide piece 437 is disposed in a staggered manner with the magnetic body 4362 along the direction of the optical axis of the camera shot 41. For the direction of the optical axis of the camera shot 41, refer to a Z direction in FIG. 17.

After the magnetic guide piece 437 and the magnetic body 4362 are attracted to each other, the magnetic guide piece 437 generates an attracting force F1 for the magnetic body 4362 in the direction of the optical axis of the camera shot 41, and generates an attracting force F2 in the radial direction of the rotor 432. After the attracting force F 1 and the attracting force F2 are combined, the magnetic guide piece 437 generates an attracting force F that is obliquely upward for the magnetic body 4362. The attracting force F may also be referred to as a pulling force of the magnetic guide piece 437 for the magnetic body 4362.

The magnetic guide piece 437 is fastened on the base 431, and the magnetic body 4362 is fixedly connected to the rotor 432. Therefore, the attracting force F can ensure that a force of the rotor 432 that is obliquely upward can be kept fixed under the action of the magnetic guide piece 437, so that the magnetic body 4362 and the rotor 432 are suspended in the base 431 by means of the attracting force F, to fasten the rotor 432 in the base 431. While the rotor 432 is prevented from falling out of the mounting slot 4315, a quantity of structural members in the variable aperture component 43 can be reduced (for example, the plurality of balls 46 are reduced), and a track slot between the base 431 and the rotor 432 is avoided. Therefore, the variable aperture component 43 has a feature of a simple structure, so that composition of the variable aperture component 43 is relatively easy and manufacturing costs are relatively low.

Generally, a rotation angle of the rotor 432 relative to the base 431 is relatively small (for example, 2 degrees or 3 degrees). When the rotor 432 rotates relative to the base 431, relative positions of the magnetic guide piece 437 and the magnetic body 4362 are not greatly affected. Therefore, when the magnetic body 4362 rotates along with the rotor 432 relative to the base 431, the attracting force F of the magnetic guide piece 437 for the rotor 432 is not affected. That is, when the rotor 432 rotates, the rotor 432 can still be fastened in the base 431 by using the magnetic guide piece 437, so as to prevent the rotor 432 from getting out of the mounting slot 4315.

The attracting force F1 of the magnetic guide piece 437 for the magnetic body 4362 in the direction of the optical axis of the camera shot 41 is greater than a total weight of the rotor 432 and the magnetic body 4362, so as to prevent the rotor 432 from falling out of the mounting slot 4315 under the weight of the rotor and the magnetic body 4362.

It should be noted that, to ensure that the force of the rotor 432 is balanced, in some embodiments, there may be at least two voice coil drive modules 436. The at least two voice coil drive modules 436 are evenly distributed along a circumferential direction of the rotor 432. This can facilitate rotation of the rotor 432 relative to the base 431. In addition, the voice coil drive modules 436 can drive to enhance rotation stability of the rotor 432 relative to the base 431.

In FIG. 14, two voice coil drive modules 436 are used as an example, to show distribution of the voice coil drive modules 436 in the circumferential direction of the rotor 432. When there are more than two voice coil drive modules 436, the voice coil drive modules 436 may be evenly distributed in the circumferential direction of the rotor 432 as shown in FIG. 14.

In the camera module 4, a quantity of magnetic guide pieces 437 and a quantity of magnetic bodies 4362 are the same and are in a one-to-one correspondence, so that the rotor 432 can be stably fastened in the base 431 by using the magnetic guide piece 437, to ensure that the rotor 432 can always rotate relative to the base 431 around a rotation axis of the rotor. The rotation axis of the rotor 432 may be collinear with the optical axis of the camera shot 41.

In this case, a sum of attracting forces F1 of magnetic guide pieces 437 for magnetic bodies 4362 in the direction of the optical axis of the camera shot 41 is greater than a total weight of the rotor 432 and the magnetic bodies 4362, so as to prevent the rotor 432 from falling out of the mounting slot 4315 under the weight of the rotor and the magnetic body 4362.

The magnetic body 4362 is located within a coverage range of the magnetic guide piece 437, and a geometrical center of the magnetic guide piece 437 is located on a side of a geometrical center of the magnetic body 4362 facing the blade 433. Therefore, this ensures that while a sufficient attracting force exists between the magnetic guide piece 437 and the magnetic body 4362, the geometrical center of the magnetic guide piece 437 can deviate towards a side of the blade 433 relative to the magnetic body 4362, so that the magnetic guide piece 437 is disposed in a staggered manner with the magnetic body 4362 along a thickness direction of the base 431.

The flexible circuit board 4364 and the magnetic guide piece 437 may be fixedly connected to the base 431 by means of adhesion, rivet connection, clipping, another connection method, or the like. Using adhesion as an example, a circumferential side of the gap 4317 of the base 431 may be provided with at least two positioning protrusions 4318 (as shown in FIG. 14). Both positions of the flexible circuit board 4364 and the magnetic guide piece 437 corresponding to the positioning protrusions 4318 are provided with through-holes (not shown in the figure) through which the positioning protrusions 4318 can pass, so that the positioning protrusions 4318 can pass through the through-holes on the flexible circuit board 4364 and the magnetic guide piece 437 in sequence, to limit mounting positions of the flexible circuit board 4364 and the magnetic guide piece 437 on the base 431. In addition, the flexible circuit board 4364 may be adhered to the base 431, and the magnetic guide piece 437 may be adhered to the flexible circuit board 4364, so that while the flexible circuit board 4364 and the magnetic guide piece 437 are fastened on the base 431, the magnetic guide piece 437 can be pressed on the flexible circuit board 4364.

Referring to FIG. 17, the camera module 4 further includes a drive chip 438, the drive chip 438 is located on a side of the flexible circuit board 4364 facing the rotor 432, and is electrically connected to the voice coil drive module 436, to control the voice coil drive module 436. In this way, the drive chip 438 controls the voice coil drive module 436 to drive the rotor 432 to rotate relative to the base 431, to adjust the size of the aperture hole 434.

Specifically, the drive chip 438 and the coil 4361 may both be fastened on the flexible circuit board 4364, so that the drive chip 438 may be electrically connected to the coil 4361 by using the flexible circuit board 4364, thereby implementing that the drive chip 438 is electrically connected to the voice coil drive module 436. In addition, the flexible circuit board 4364 may be electrically connected to a drive circuit board 45 in the camera module 4, so that the drive circuit board 45 may transmit a control signal to the drive chip 438, thereby implementing that the drive chip 438 controls the voice coil drive module 436.

In some embodiments, the drive chip 438 may further include a detection element (not shown in the figure), and the detection element is located on a side of the drive chip 438 facing the rotor 432 and is configured to detect a rotation position of the rotor 432. In this way, the drive chip 438 may control, based on a detection value of the detection element, the voice coil drive module 436 to drive the rotor 432 to rotate relative to the base 431.

When there are at least two voice coil drive modules 436, correspondingly, there are also at least two flexible circuit boards 4364. In this case, the drive chip 438 may be located on a side of one flexible circuit board 4364 facing the magnetic body 4362.

The detection element may be a Hall element or another element that can detect a rotation position of the rotor 432. Using a Hall element as an example, the Hall element can detect a rotation angle of the rotor 432 relative to the base 431 by sensing a change of a magnetic field of a magnetic part adjacent to the Hall element.

The drive chip 438 may be located in an enclosed space (not shown in the figure) of the coil 4361, so that while the detection element can better detect a change of a magnetic field, the space occupied by the coil 4361 on the flexible circuit board 4364 can be properly used to implement assembly of the drive chip 438 in the variable aperture component 43.

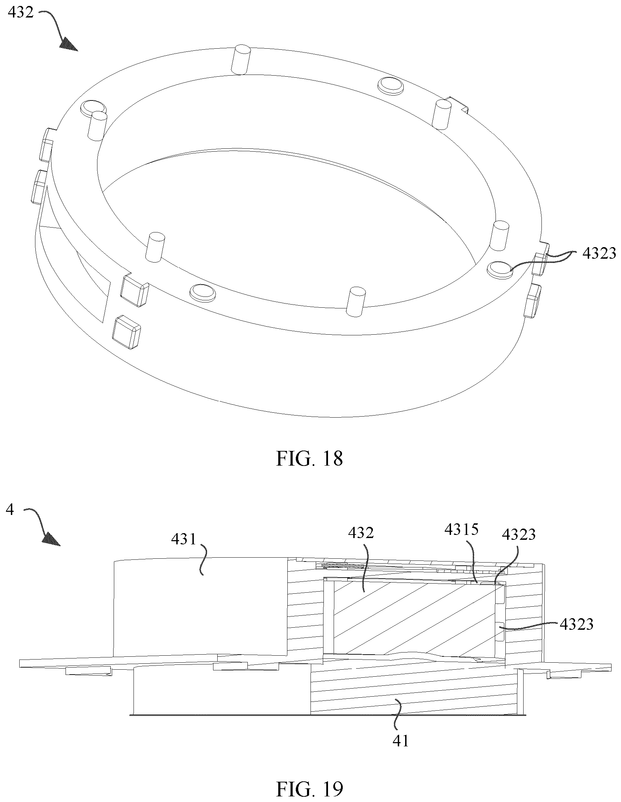

FIG. 18 is a schematic structural diagram of a rotor 432. FIG. 19 is a sectional view of a part of a camera module.

Referring to FIG. 18 and FIG. 19, the rotor 432 has a sliding protrusion 4323 that is in sliding contact with a slot wall of the mounting slot 4315, and the sliding protrusion 4323 is located on at least one of a circumferential side wall and a radial side wall of the rotor 432. When the rotor 432 rotates relative to the base 431, the sliding protrusion 4323 slides in the mounting slot 4315, and is in contact with a slot wall of the mounting slot 4315, thereby reducing a friction area between the rotor 432 and the base 431 when the rotor rotates, and relatively prolonging service life of the rotor 432 and the variable aperture component 43.

As shown in FIG. 18, the sliding protrusion 4323 may be disposed on both the circumferential side wall and the radial side wall of the rotor 432, so that compared with disposing the sliding protrusion 4323 on the circumferential side wall or the radial side wall of the rotor 432, the friction area between the rotor 432 and the base 431 when the rotor rotates can be further reduced.

It should be noted that, the sliding protrusion 4323 may include, but is not limited to, a circular protrusion or a block protrusion on the base 431. In this application, a shape of the sliding protrusion 4323 is not further limited.

The electronic device 100 in this application may include the camera module 4 according to any one of the foregoing implementations. As described above, the electronic device 100 may further include an optical cover plate 5. The optical cover plate 5 may cover on the object side of the camera shot 41 in the camera module 4, so that ambient light outside the electronic device 100 can be emitted into the camera shot 41 through the optical cover plate 5. Therefore, a photographing function of the electronic device 100 is implemented, and the optical cover plate 5 of the electronic device 100 has desirable aesthetic effect, to satisfy people's requirement on aesthetic appearance and photographing quality of the electronic device 100.

It should be noted that, the camera module 4 may be applied to the electronic device 100 to replace the camera module 4a. Similarly, the camera module 4 may include, but is not limited to, a variable focal length module such as an auto focus (Auto Focus, AF for short) module, a fix focus (Fix Focus, FF for short) module, a wide-angle camera module, a telephoto camera module, a color camera module, or a black and white camera module. For assembly of the camera module 4 in the electronic device 100, refer to the foregoing related description of the camera module 4a, and details are not described herein again. For assembly of the optical cover plate 5 on the electronic device 100, refer to the foregoing related description, and details are not described herein again.

In the descriptions of the embodiments of this application, it should be noted that, Unless otherwise explicitly specified or defined, the terms such as "mount", "interconnect", and "connect" should be understood in a broad sense. For example, the connection may be a fastened connection, an indirect connection through an intermediary, internal communication between two components, or interaction between two components. A person of ordinary skill in the art may understand the specific meanings of the foregoing terms in the embodiments of this application according to specific situations.

The terms such as "first", "second", "third", and "fourth" (if any) in the specification and claims of the embodiments of this application and in the accompanying drawings are used for distinguishing similar objects and not necessarily used for describing any particular order or sequence.

## Claims

1. A camera module, applied to an electronic device, comprising a camera shot, a variable aperture component, and an image sensor, wherein the variable aperture component comprises a base and a plurality of blades, the blades are rotationally connected to the base and enclose to form an aperture hole having an adjustable size, the camera shot is fixedly connected to the base, and the aperture hole is located in a direction of an optical axis of the camera shot; wherein both the base and the camera shot are fastened relative to an optical cover plate that covers on an object side of the camera shot in the electronic device; and the image sensor is located on an image side of the camera shot, and is movably disposed relative to the camera shot.

2. The camera module according to claim 1, wherein the image sensor is movably disposed relative to the camera shot along the direction of the optical axis of the camera shot, so that the image sensor performs focus;
and/or the image sensor is movably disposed relative to the camera shot in a plane perpendicular to the direction of the optical axis of the camera shot, so that the image sensor provides shake compensation.

3. The camera module according to claim 1 or 2, comprising a drive apparatus, wherein the drive apparatus comprises a drive component and a carrying component carrying the image sensor, and the carrying component is connected to the drive component, and is configured to be driven by the drive component to move relative to the camera shot along the direction of the optical axis of the camera shot and/or in a plane perpendicular to the direction of the optical axis of the camera shot, and drive the image sensor to synchronously move relative to the camera shot, so that the image sensor performs focus and/or provides shake compensation.

4. The camera module according to claim 3, wherein the drive apparatus further comprises a drive housing, the drive housing has a cavity, the carrying component and the drive component are both disposed in the cavity, a side of the drive housing facing the camera shot has a light inlet hole, and the light inlet hole communicates with the cavity.

5. The camera module according to claim 4, wherein the base is located on a side of the drive housing facing the optical cover plate.

6. The camera module according to claim 1, wherein the base has an accommodating space communicating with the aperture hole, and at least a part of the camera shot is located in the accommodating space.

7. The camera module according to claim 1, wherein the blade is located on the object side of the camera shot, and the center of the aperture hole is located on the optical axis of the camera shot.

8. The camera module according to any one of claims 1 to 7, wherein the variable aperture component further comprises a rotor, and the rotor is rotationally disposed in the base and is connected to the blades, so that when rotating relative to the base, the rotor drives the blade to rotate relative to the base around a rotation axis of the blade, to adjust a size of the aperture hole.

9. The camera module according to claim 8, wherein a mounting slot is provided in the base, and the rotor is fastened in the mounting slot and rotates relative to the base.

10. The camera module according to claim 9, wherein the mounting slot is located on a circumferential side of the accommodating space of the base.

11. The camera module according to claim 9, wherein the rotor has a sliding protrusion that is in sliding contact with a slot wall of the mounting slot, and the sliding protrusion is located on at least one of a circumferential side wall and a radial side wall of the rotor.

12. The camera module according to claim 8, wherein the variable aperture component further comprises at least one voice coil drive module, the voice coil drive module comprises a coil and a magnetic body, and the magnetic body is fixedly connected to a circumferential side wall of the rotor; and
the coil is located in a position of the base opposite to the magnetic body, and the coil and the magnetic body sense each other during power on, to drive the rotor to rotate relative to the base.

13. The camera module according to claim 12, wherein the circumferential side wall of the rotor has an assembly slot, the magnetic body is embedded in the assembly slot, a position of the circumferential side wall of the base corresponding to the magnetic body has a gap, and the coil is located in the gap and has a clearance from the magnetic body.

14. The camera module according to claim 12, wherein the voice coil drive module further comprises a flexible circuit board disposed on the base, and the coil is located on a side of the flexible circuit board facing the magnetic body.

15. The camera module according to claim 14, wherein the variable aperture component further comprises a magnetic guide piece pressed on the flexible circuit board, the magnetic guide piece is on the circumferential side wall of the base and is located on a side of the magnetic body facing the blade, and the magnetic guide piece is configured to attract the magnetic body, so that the rotor is suspended in the base.

16. The camera module according to claim 15, wherein an attracting force of the magnetic guide piece for the magnetic body in the direction of the optical axis of the camera shot is greater than a total weight of the rotor and the magnetic body.

17. The camera module according to claim 15, wherein the magnetic body is located within a coverage range of the magnetic guide piece, and a geometrical center of the magnetic guide piece is located on a side of a geometrical center of the magnetic body facing the blade.

18. The camera module according to claim 14, wherein the variable aperture component further comprises a drive chip, and the drive chip is located on a side of the flexible circuit board facing the rotor, and is electrically connected to the voice coil drive module, to control the voice coil drive module.

19. The camera module according to claim 18, wherein the drive chip comprises a detection element, and the detection element is located on a side of the drive chip facing the rotor and is configured to detect a rotation position of the rotor.

20. The camera module according to claim 12, wherein there are at least two voice coil drive modules, and the at least two voice coil drive modules are evenly distributed along a circumferential direction of the rotor.

21. The camera module according to any one of claims 8 to 20, wherein the rotor slides relative to the blade when rotating relative to the base, and drives the blade to rotate relative to the base around the rotation axis of the blade, to adjust the size of the aperture hole.

22. The camera module according to claim 21, wherein a position of the rotor corresponding to each of the blades is provided with a sliding part, a position of the base corresponding to each sliding part is provided with an avoidance hole, and a position of the blade corresponding to the sliding part is provided with a sliding hole; and
the sliding part passes through the avoidance hole and the sliding hole in sequence, and slides relative to the blade in the sliding hole when rotating relative to the base along with the rotor, so as to drive the blade to rotate relative to the base around the rotation axis of the blade.

23. The camera module according to any one of claims 1 to 22, wherein a position of the base corresponding to each of the blades is provided with a connecting column, a first end of the blade is threaded on a corresponding connecting column and rotates relative to the base around the connecting column, and a central axis of the connecting column forms a rotation axis of the blade; and
a second end of each of the blades encloses to form the aperture hole, and synchronously rotates along with the first end of the blade when the first end of the blade rotates around the connecting column, to adjust the size of the aperture hole.

24. The camera module according to any one of claims 1 to 22, wherein the variable aperture component further comprises a limiting cover plate, and the limiting cover plate is disposed on the blade and is fixedly connected to the base.

25. An electronic device, comprising an optical cover plate and the camera module according to any one of claims 1 to 24, wherein the optical cover plate covers on the object side of the camera shot in the camera module.
